# EUROPEAN PATENT SPECIFICATION

(11) **EP 3 164 459 B1**
(45) Date of publication and mention of the grant of the patent: **22.01.2025**
(21) Application number: 15814688.6
(22) Date of filing: 02.07.2015
(51) Int. Cl.: C09J 7/20, B32B 37/12, B32B 7/14, B65D 65/40, C09J 5/06, C09J 7/35

(54) **LAMINATING METHODS USING ADHESIVE PACKAGING SYSTEM**
LAMINIERUNGSVERFAHREN MIT KLEBSTOFFVERPACKUNGSSYSTEM
PROCÉDÉS DE LAMINAGE UTILISANT LE SYSTÈME D'EMBALLAGE ADHÉSIF

(30) Priority: 03.07.2014 WO PCT/CA2014/050633
(43) Date of publication of application: 10.05.2017
(73) Proprietor: Marotech Inc., St-Augustin de Desmaures, Québec G3A 2Y2 (CA)
(72) Inventor: ROBITAILLE, Martin, St-Augustin de Desmaures, Québec J7Z 6S9 (CA)
(74) Representative: Delaveau, Sophie
(86) International application number: PCT/CA2015/050616
(87) International publication number: WO 2016/000078

(56) References cited:
- EP-A1- 2 014 734
- EP-A1- 2 072 595
- US-A- 2 294 347
- US-A- 3 885 559
- US-A1- 2002 108 564
- US-A1- 2009 291 279
- US-A1- 2012 273 561

## Description

### Field of the Invention

The present invention generally relates to laminating methods using adhesive packaging system such as tapes, or ribbons, webs, strings, or the like generally referred to herein as "tape", with improved performance when the tape is being unwound at a laminating machine such as a corrugating machine or press. One aspect of the present invention is to increase the operating envelope of the tape in the laminating machine.

### Background of the Invention

Reinforcing or Tear tapes have been used for many years in modem packaging as an aid to maintain structural integrity or as an easy open feature in boxes, packages and/or containers. The packaging industry has made huge productivity improvements over the years with the results that laminating machines are operating at increased speeds. The reinforcing or tear tapes are heat activated, and the heat present in the laminating machines is activating the adhesion of the tapes so they will bond to the substrate. As the tapes reach the end of the laminating machines, the tapes also needs to be cooled down so the adhesive is set.

U.S. patents nos. US 2,294,347 (Bauer et al.) and US 3,885,559 (Economou) teach sealing tapes comprising a cloth substrate or backing and an adhesive layer wherein the adhesive layer has alternating areas of different bond strength. These tapes are not adapted to be used in laminating machines. US 2002/0108564 A1 (Gruenewald et al.) relates to a method of making packaging tapes and proposes a use of two different hotmelt adhesives.

Indeed, if the adhesive of the tapes is not set properly, the tapes will not bond the laminated product properly, which will results in defects in the laminated products. An operating envelope in the performance of the tapes in the laminating machine is then a critical factor, as the tapes have to be heated enough to provide the required adhesion to the substrate and at the same time cooled enough at the exit of the laminating machine so the adhesion of the tapes will be set, one working against the other.

As the laminating machines are increasing in speed, the operating envelope of the tapes is becoming too small and either the tapes are not bonded properly to the substrate, or the tapes are not set at the end of the laminating machines which leads to defects to the laminated products.

There is thus a need for improved tapes and laminating methods where the adhesive of the tapes is set properly and where the tapes will bond the laminated product properly, which will results in eliminating defects in the resulting laminated products.

### Summary of the Invention

The aforesaid and other objectives of the present invention are realized by generally providing a process for laminating a substrate using an adhesive packaging system adapted to be used in a laminating, corrugating or press process to reinforce a packaging or as an easy open feature for packaging.

The disclosure is first directed to adhesive packaging system, said system comprising:
a core structure; and
an adhesive layer coated at least on one surface defined by the core structure;
wherein the adhesive layer comprises at least two different heat-activated adhesive materials located in alternative sequences over said at least one surface of the core structure, the heat-activated adhesive materials being activated at different temperatures.

The disclosure is also directed to the use of the adhesive packaging system as disclosed herein, in a laminating, corrugating or press process to reinforce a packaging or as an easy open feature for packaging.

The invention is directed to a process for laminating a substrate using the adhesive packaging system as disclosed herein, the process comprising the steps of:
a. positioning in or on a laminating machine the adhesive packaging system at a given position over the substrate to be laminated;
b. heating the adhesive packaging system while contacting the adhesive packaging system with the substrate to form a laminated substrate;
c. cooling the laminated substrate for setting one of said at least two different heat-activated adhesive materials of the adhesive packaging system to provide a first adhesion between the adhesive packaging system and the substrate; and
d. cutting a given section of the laminated substrate before a second adhesion occurred between the adhesive packaging system and the laminated substrate when the other one of said at least two different heat-activated adhesive materials of the system adhesive packaging system is set to permanently fixed the adhesive packaging system to the substrate.

The present invention allows increasing the operating envelope of operation of the tapes in the laminating machine, so the tapes will provide the required adhesion to the substrate while still be set at the of the laminating machine.

With this invention, more than one heat activated adhesive formulations are used to bond the tapes to the substrate. The tapes are constructed with adhesives which are applied in a layer to the surface of the tapes in alternative sequences so that adhesives with different properties are spaced one after the other over the length of the tapes. As the tapes are processed in the laminating machines, some of the adhesives will be heat activated with enough operating range that the tapes will be have the proper adhesion to the substrate in any operating conditions, and some of the adhesives will be formulated so that they will be set at the exit of the laminating machines also at any operating conditions of the laminating machines. Hence the tapes will have a much larger operating envelope under a very large range of operating conditions in the laminating machines.

Other and further objects and advantages of the present invention will be obvious upon an understanding of the illustrative embodiments about to be described or will be indicated in the appended claims, and various advantages not referred to herein will occur to one skilled in the art upon employment of the invention in practice.

### Brief Description of the Drawings

The above and other objects, features and advantages of the invention will become more readily apparent from the following description, reference being made to the accompanying drawings in which:
Figure 1 is a schematic view of an improved tape in accordance with a preferred embodiment of the invention where two adhesives are spaced alternatively in bands of about 2 to 3 mm along the length of the tape.
Figure 2 is a view of an improved tape in accordance with a preferred embodiment of the invention where two adhesives are spaced alternatively in bands of about 2 to 3 mm along the width of the tape.
Figure 3 is a schematic view of an improved string in accordance with preferred embodiments of the invention where two adhesives are spaced alternatively in bands of about 2 to 3 mm: along the circumference of the string forming rings (Fig. 3A), along the length of the string forming bands (Fig. 3B) or along the circumference of the string forming alternated spirals (Fig. 3C).

### Detailed Description of Preferred Embodiments

A novel packaging tape will be described hereinafter. Although the invention is described in terms of specific illustrative embodiment(s), it is to be understood that the embodiment(s) described herein are by way of example only and that the scope of the invention is not intended to be limited thereby.

The tape according to the present disclosure is adapted to be used in a laminating process, a corrugating process, a press process or any process known in the art where reinforcing a packaging or having an easy open feature for packaging is needed.

The disclosure is also directed to an adhesive packaging system comprising a core structure and an adhesive layer coated at least on one surface defined by the core structure. The adhesive layer comprises at least two different heat-activated adhesive materials located in alternative sequences over said at least one surface of the core structure, the heat-activated adhesive materials being activated at different temperatures.

According to one preferred embodiment, the core structure has the shape of a ribbon, such as those generally used to form an adhesive tape, a mesh or a string. The string can be made of a single or plurality of fibres or yarns.

According to one preferred embodiment, the adhesive layer of the adhesive packaging system may comprise a plurality of bands of heat-activated adhesive materials, the bands being alternatively spaced over said at least one surface of the core structure.

According to one preferred embodiment, the adhesive packaging system may be an adhesive tape having its core structure defining two opposite surfaces, and the heat-activated adhesive materials form a plurality of bands. The bands are either alternatively spaced longitudinally across the length over the width of at least one surface of the core structure; or alternatively spaced longitudinally across the width over the length of at least one surface of the core structure.

According to another preferred embodiment, the adhesive packaging system may an adhesive string having its core structure defining an outer substantially cylindrical surface around a longitudinal axis. The heat-activated adhesive materials then form a plurality of bands alternatively spaced over the outer cylindrical surface either along the longitudinal axis or alternatively around the longitudinal axis.

According to a preferred embodiment, each band of adhesive materials have a width up to 50 mm, preferably from 2 to 3 mm. Other widths can be considered without departing

The core structure of the adhesive packaging system may comprise paper, foil, fabric, plastic film or polymeric yarns, such as polyester yarns, or biaxially oriented polypropylene or polyethylene yarns.

According to a preferred embodiment, the adhesive layer may comprise only two (2) different heat-activated adhesive materials located in alternative sequences on said at least one surface of the core structure. Preferably, one of the heat-activated materials may have a low temperature of activation between 70 °C and 120 °C, the other heat-activated material having a high temperature of activation between 75 °C and 125 °C, the difference of temperature ΔT between the two heat-activated materials being about 5 °C. Of course, other temperature ranges and ΔT can be considered and used for the making of the adhesive system without departing from the invention. By "about", it is meant that the value, such as a temperature, can vary within a certain range depending on the margin of error of the method or device used to evaluate such value. A margin of error of 10% is generally accepted.

According to a preferred embodiment, the heat-activated adhesive materials comprise Ethylene-Vinyl-Acetate (EVA) based hot melt adhesives.

According to a preferred embodiment, the adhesive packaging system has a breaking strength from 80 N to 1000 N.

As aforesaid, the invention is directed to a process for laminating a substrate using the adhesive packaging system as disclosed herein. The substrate can be any substrate known in the art of laminating, such as substrates made of cartons, papers, textiles, plastics or the like.

The process comprises the steps of:
a. positioning in or on a laminating machine the adhesive packaging system at a given position over the substrate to be laminated;
b. heating the adhesive packaging system while contacting the adhesive packaging system with the substrate to form a laminated substrate;
c. cooling the laminated substrate for setting one of said at least two different heat-activated adhesive materials of the adhesive packaging system to provide a first adhesion between the adhesive packaging system and the substrate; and
d. cutting a given section of the laminated substrate before a second adhesion occurred between the adhesive packaging system and the laminated substrate when the other one of said at least two different heat-activated adhesive materials of the system adhesive packaging system is set to permanently fixed the adhesive packaging system to the substrate.

According to a preferred embodiment, in step b) of the process, the adhesive packaging system is heated by heat generated by the laminating machine or with an external heat source. Preferably, the external heat source may a heat wheel or shoe.

According to a preferred embodiment, in step c) of the process, the laminated substrate is cooled at room temperature when exiting the laminating machine or with an external cooling source. By "room temperature", it is meant a temperature of between about 15 and 35 °C, more preferably between 25 and 32 °C.

### Examples

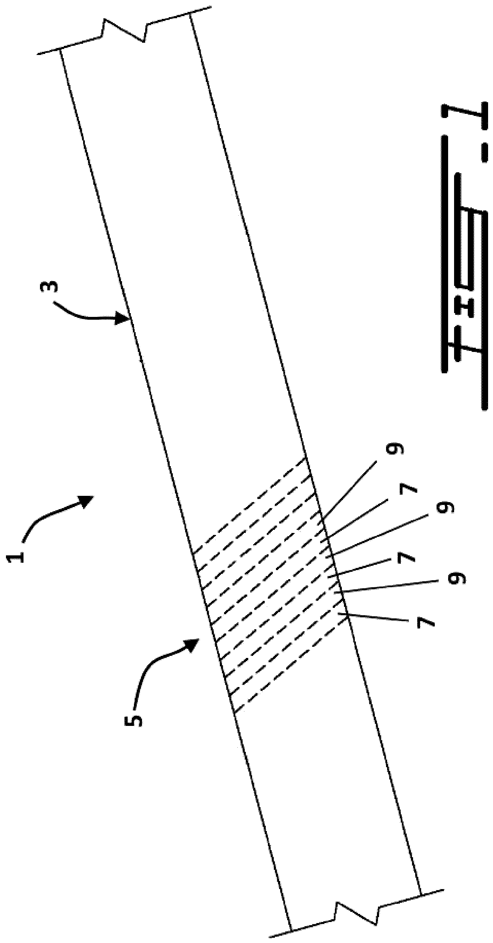

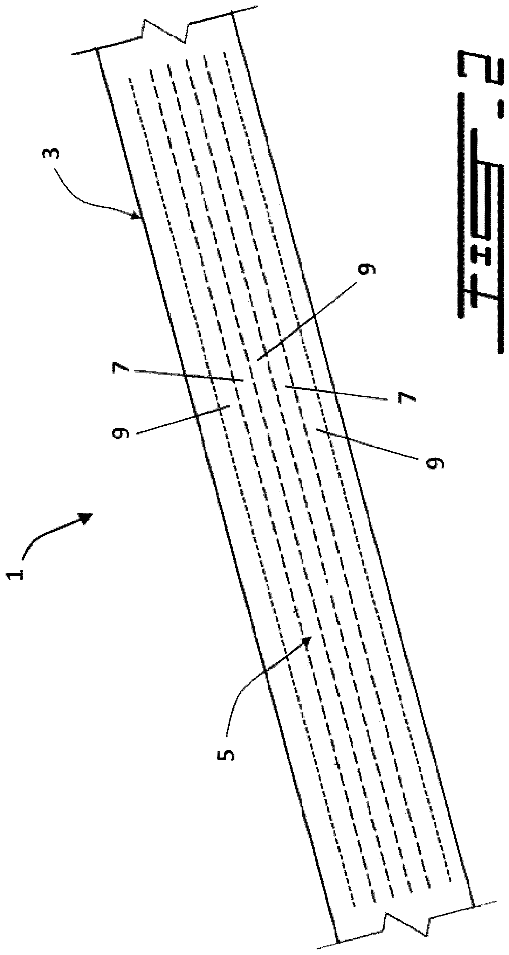

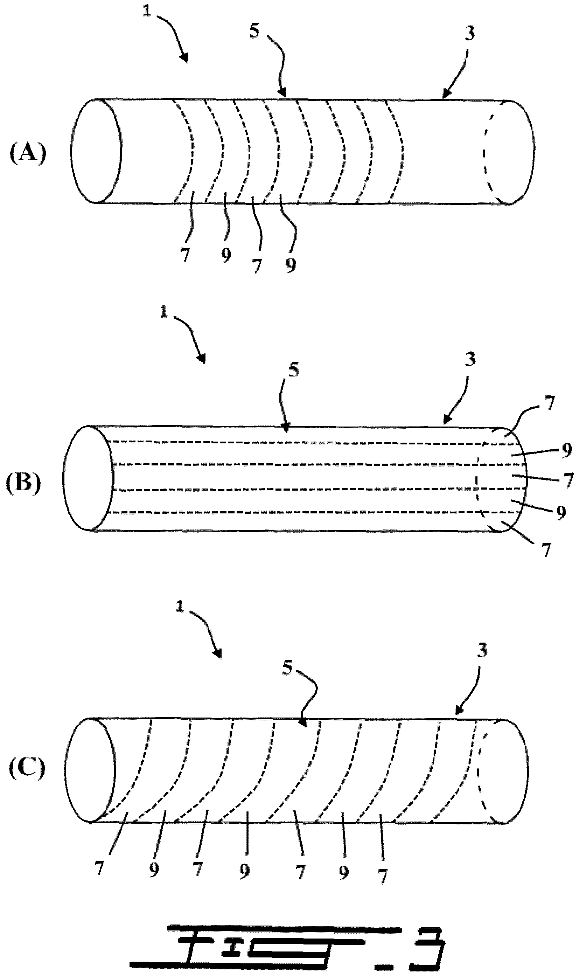

In Figures 1 and 2, the adhesive packaging system **1** is a tape, whereas in Figure 3, the adhesive packaging system **1** is a string.

The adhesive packaging system **1** first comprises a core structure **3.** The core structure or core can be made in any materials known in the art for the making of packaging tapes. The core generally comprises a flexible material such as paper, foil, fabric, plastic film or textile yarns (such as polyester yarns, biaxially oriented polypropylene or polyethylene) to provide strength and structure. Core tensile strength, elongation, stiffness, and tear resistance can be matched to the intended use of the tape. The string illustrated on Figure 3 can be made of one or a plurality of yarns.

The system **1** also comprises an adhesive layer **5** coated at least on one side of the core structure **3.**

Figures 1 and 2 illustrate a tape **1** where the adhesive layer is only on one side of the core structure. Figure 3 illustrates a string **1** where the adhesive layer is on the outer surface of the core structure. The adhesive layer **5** comprises at least two different heat-activated adhesive materials **7, 9** located in alternative sequences over the core **3.** Preferably, the system **1** comprises two different heat-activated materials as illustrated on the Figures.

For example, the Marotape^{®} from Marotech Inc. is made from a core of Polyester Yams which are coated with EVA based Hot Melt Adhesives or the Marotape^{®}Plus which is made with a core of Polyester Yarns, coated with EVA based Hot Melt Adhesives and also applied to a backing of Kraft Paper.

Marotech Inc. also provides the Marotape^{®}FPT which is made from a core of Polyester film, coated with EVA based Hot Melt Adhesives, also applied to a backing of Kraft Paper.

As another example, MaroString^{™} is made from a core of Polyester Yarns which are coated with EVA based Hot Melt Adhesives.

All these Marotape^{®} products are available in a wide range of breaking strengths, widths and hot melt adhesives. The Breaking Strengths can be from 80 N to 1000 N, the widths can be from 2 mm to 50 mm and the Hot Melt Adhesives can have a melting point from 70 °C to 120 °C.

According to preferred embodiments, such as those illustrated on Figures 1 to 3, the adhesive packaging system **1** may comprise two different heat-activated adhesive materials **7, 9** located in alternative sequences over the core structure **3.**

By "heat-activated adhesive material", it is meant any adhesive that is solid and has little adhesion at room temperature. Once the adhesive has been heated and it reached its melting point, adhesion is activated the adhesion process starts. When the adhesive is cooled down again, the adhesive becomes solid again. In one specific embodiment the heat-activated adhesive material is an Ethylene-Vinyl-Acetate (EVA) base hot melt adhesive, which is common and well known in the art of making adhesives.

The heat-activated adhesive materials being activated at different temperatures. Preferably the temperatures are from a range of 70 °C to 120 °C, depending on the laminating process. In one embodiment of the invention, we can use two (2) Hot Melt Adhesives with a difference of melting point of about 5 °C, but a smaller or larger gap can be used depending on the physical properties of the laminating process.

As examples of heat-activated adhesive materials that can be used, there are Technomelt^{®}8370 from Henkel Corporation having a melting point de 110 °C and Technomelt^{®}8628 from Henkel Corporation with a melting point of about 105 °C. Other known heat-activated adhesive materials known in the art of packaging adhesive systems can be used.

As illustrated on Figure 1, the heat-activated adhesive materials may form a plurality of bands **7, 9** alternatively spaced longitudinally across the width over the length of at least one surface of the core structure **3.** As illustrated on Figure 2, the heat-activated adhesive materials **7, 9** may form a plurality of bands alternatively spaced longitudinally across the length over the width of at least one surface of the core structure **3.** The direction of the band can be either perpendicular to the longitudinal edge of the tape, or parallel thereof. The direction can also be in any directions between these two extreme directions forming an angle between with the longitudinal edge, such as illustrated on Figure 1, or parallel to the longitudinal edge, such as illustrated on Figure 2.

Figure 3 illustrates an improved string 1 in accordance with preferred embodiments of the invention where two adhesives are spaced alternatively in bands **7, 9** of about 2 to 3 mm: either along the circumference of the string forming rings (Fig. 3A), along the length of the string forming bands (Fig. 3B), or along the circumference of the string forming alternated spirals (Fig. 3C).

Preferably, each band of adhesive materials has a width of about 2 to 3 mm. Of course, the width of the band is to be adapted to the size of the tap and its application.

## Claims

1. A process for laminating a substrate using an adhesive packaging system said system comprising:
a core structure; and
an adhesive layer coated at least on one surface defined by the core structure; the adhesive layer comprising at least two different heat-activated adhesive materials located in alternative sequences over said at least one surface of the core structure, each of the heat-activated adhesive materials being activated at different temperatures, the activation temperature of the heat-activated adhesive materials being defined as the melting point,
said process comprising the steps of:
a. positioning in or on a laminating machine the adhesive packaging system at a given position over the substrate to be laminated;
b. heating the adhesive packaging system while contacting the adhesive packaging system with the substrate to form a laminated substrate;
c. cooling the laminated substrate for setting one of said at least two different heat-activated adhesive materials of the adhesive packaging system to provide a first adhesion between the adhesive packaging system and the substrate; and
d. cutting a given section of the laminated substrate before a second adhesion occurred between the adhesive packaging system and the laminated substrate when the other one of said at least two different heat-activated adhesive materials of the system adhesive packaging system is set to permanently fixed the adhesive packaging system to the substrate.

2. The process of claim 1, **characterized in that** in step b), the adhesive packaging system is heated by heat generated by the laminating machine or with an external heat source such as a heat wheel or shoe.

3. The process of claim 1 or 2, **characterized in that** in step c), the laminated substrate is cooled at room temperature, said room temperature being a temperature between 15 and 35 °C, when exiting the laminating machine or with an external cooling source.

## Patentansprüche

1. Verfahren zum Laminieren eines Substrats mit einem Klebstoffverpackungssystem, wobei das System Folgendes umfasst:
eine Kernstruktur; und
eine Klebstoffschicht, die wenigstens auf eine durch die Kernstruktur definierte Oberfläche aufgebracht ist;
wobei die Klebstoffschicht wenigstens zwei unterschiedliche wärmeaktivierte Klebstoffe umfasst, die sich in abwechselnden Reihenfolgen über der wenigstens einen Oberfläche der Kernstruktur befinden, wobei jeder der wärmeaktivierten Klebstoffe bei anderen Temperaturen aktiviert wird, wobei die Aktivierungstemperatur der wärmeaktivierten Klebstoffe als der Schmelzpunkt definiert ist,
wobei das Verfahren folgende Schritte umfasst:
a. Anordnen - in oder auf einer Laminiermaschine - des Klebstoffverpackungssystems an einer bestimmten Position über dem zu laminierenden Substrat;
b. Erwärmen des Klebstoffverpackungssystems, während das Klebstoffverpackungssystem mit dem Substrat in Kontakt steht, um ein laminiertes Substrat auszubilden;
c. Kühlen des laminierten Substrats zum Abbinden eines der wenigstens zwei unterschiedlichen wärmeaktivierten Klebstoffe des Klebstoffverpackungssystems, um eine erste Haftung zwischen dem Klebstoffverpackungssystem und dem Substrat bereitzustellen; und
d. Schneiden eines bestimmten Abschnitts des laminierten Substrats, bevor eine zweite Haftung zwischen dem Klebstoffverpackungssystem und dem laminierten Substrat eintritt, wenn der andere der wenigstens zwei unterschiedlichen wärmeaktivierten Klebstoffe des Klebstoffverpackungssystems abbindet, um das Klebstoffverpackungssystem dauerhaft an dem Substrat zu befestigen.

2. Verfahren nach Anspruch 1, **dadurch gekennzeichnet, dass** in Schritt b) das Klebstoffverpackungssystem durch Wärme, die durch die Laminiermaschine erzeugt wird, oder mit einer externen Wärmequelle, wie etwa einem Heizrad oder -schuh, erwärmt wird.

3. Verfahren nach Anspruch 1 oder 2, **dadurch gekennzeichnet, dass** in Schritt c) das laminierte Substrat bei Raumtemperatur gekühlt wird, wobei die Raumtemperatur eine Temperatur zwischen 15 und 35 °C ist, wenn es die Laminiermaschine verlässt, oder mit einer externen Kühlquelle.

## Revendications

1. Procédé de contrecollage d'un substrat au moyen d'un système d'emballage adhésif, ledit système comprenant :
une structure de coeur ; et
une couche adhésive déposée sur au moins une surface définie par la structure de coeur ; la couche adhésive comprenant au moins deux matériaux adhésifs activés par la chaleur différents placés dans des séquences alternées au-dessus de ladite au moins une surface de la structure de coeur, chacun des matériaux adhésifs activés par la chaleur étant activé à une température différente, la température d'activation des matériaux adhésifs activés par la chaleur étant définie comme le point de fusion,
ledit procédé comprenant les étapes de :
a. positionnement dans ou sur une contrecolleuse du système d'emballage adhésif à une position donnée au-dessus du substrat à contrecoller ;
b. chauffage du système d'emballage adhésif pendant que le système d'emballage adhésif est mis en contact avec le substrat pour former un substrat contrecollé ;
c. refroidissement du substrat contrecollé pour durcir un desdits au moins deux matériaux adhésifs activés par la chaleur différents du système d'emballage adhésif pour assurer une première adhérence entre le système d'emballage adhésif et le substrat ; et
d. découpe d'une section donnée du substrat contrecollé avant qu'une deuxième adhérence apparaisse entre le système d'emballage adhésif et le substrat contrecollé quand l'autre desdits au moins deux matériaux adhésifs activés par la chaleur différents du système d'emballage adhésif est durci pour fixer de façon permanente le système d'emballage adhésif au substrat.

2. Procédé selon la revendication 1, **caractérisé en ce qu'**à l'étape b), le système d'emballage adhésif est chauffé par la chaleur générée par la contrecolleuse ou avec une source de chaleur externe telle qu'un rouleau ou sabot chauffant.

3. Procédé selon la revendication 1 ou 2, **caractérisé en ce qu'**à l'étape c), le substrat contrecollé est refroidi à température ambiante, ladite température ambiante étant une température comprise entre 15 et 35 °C, lors de la sortie de la contrecolleuse ou avec une source de refroidissement externe.
